# EUROPEAN PATENT APPLICATION

(11) **EP 3 991 926 A1**
(43) Date of publication of application: **04.05.2022**
(21) Application number: 20461575.1
(22) Date of filing: 28.10.2020
(51) Int. Cl.: B25J 15/04

(54) **A GRIPPING ASSEMBLY FOR COUPLING A TOOL WITH A MANIPULATOR**

(71) Applicant: Centrum Badan i Rozwoju Technologii dla Przemyslu S.A., 00-645 Warszawa (PL)
(72) Inventor: PUTYNKOWSKI, Grzegorz, 00-645 Warszawa (PL); WOZNY, Krzysztof, 00-645 Warszawa (PL); IWANEK, Sylwester, 00-645 Warszawa (PL); SAPETA, Grzegorz, 00-645 Warszawa (PL); KORDACZEK, Rafal, 00-645 Warszawa (PL)
(74) Representative: Kancelaria Eupatent.pl Sp. z.o.o

(57) **Abstract**

A gripping assembly (1) for coupling a tool with a manipulator, the gripping assembly (1) comprising: a tool holder (10) having a cylindrical socket (12) with through openings (13) located at a sidewall of the socket (12) and a tool mounting means (11) for mounting a tool thereto; and a locking unit (20) having a guiding head (21) with bolts (22) for fixing the locking unit (20) in the through openings (13) of the socket (12) of the tool holder (10) and having manipulator mounting means (27) for mounting the gripping assembly (1) to the manipulator.

## Description

### TECHNICAL FIELD

The present invention relates to a gripping assembly for coupling a tool with a manipulator.

### BACKGROUND

Gripping assemblies are commonly used in automation of industrial processes, in cooperation with dedicated industrial robots. For example, the gripping assembly (also called simply a gripper) can be attached to a robot arm, for performing cyclic operations of gripping a workpiece for processing or for transporting and arranging workpieces in a container, on a pallet etc.

Gripping assemblies may also have a form of grippers for holding tools which are to be attached to the robot arm. Such solutions allow for easy and fast exchange of tools.

However, conventional gripping assemblies are prone to environmental conditions in which dust, dirt, high humidity are present, which, over time, often lead to their malfunctioning.

Therefore there is a need to provide a gripping assembly which is less prone to harsh industrial conditions.

### SUMMARY

The object of the invention is a gripping assembly for coupling a tool with a manipulator, the gripping assembly comprising: a tool holder having a cylindrical socket with through openings located at a sidewall of the socket and a tool mounting means for mounting a tool thereto; and a locking unit having a guiding head with bolts for fixing the locking unit in the through openings of the socket of the tool holder and having manipulator mounting means for mounting the gripping assembly to the manipulator.

The socket can be a through opening.

The bolts can be actuated by an electromagnetic locking mechanism comprising a metal piston slidable in the direction perpendicular to the direction of movement of the bolts, wherein the metal piston is actuated by an electromagnet to a position in which the bolts are retracted and is actuated by a spring to a position in which the bolts are extended.

The bolts can be connected to the metal piston by means of stiff pivotable connecting rods.

The bolts can be connected to the metal piston by means of flexible connecting cables guided by pulleys.

The bolts can be directly actuated by means of pneumatic, hydraulic or electromagnetic actuators to a position in which the bolts are retracted and to a position in which the bolts are extended.

The bolts can be actuated by means of electric motor to a position in which the bolts are retracted and to a position in which the bolts are extended.

### BRIEF DESCRIPTION OF FIGURES

The device presented herein is presented by means of example embodiments on a drawing, wherein:
Fig. 1 presents a gripping assembly in an isometric view;
Fig. 2 presents a tool holder of the gripping assembly in an isometric view;
Fig. 3 presents a cross-section of the tool holder;
Fig. 4 presents a locking unit of the gripping assembly in an isometric view;
Fig. 5 presents a cross-section of the locking unit;
Figs. 6A-6D present schematically different embodiments of bolts actuation mechanism;
Figs. 7A-7B present the gripping assembly with a plastering lance, attached to a robot arm;
Figs. 8A-8B present the gripping assembly with an "h" type plastering trowel, attached to the robot arm;
Figs. 9A-9B present the gripping assembly with a "t" type plastering trowel, attached to the robot arm;
Figs. 10A-10B present the gripping assembly with a plaster scratcher, attached to the robot arm.

### DETAILED DESCRIPTION

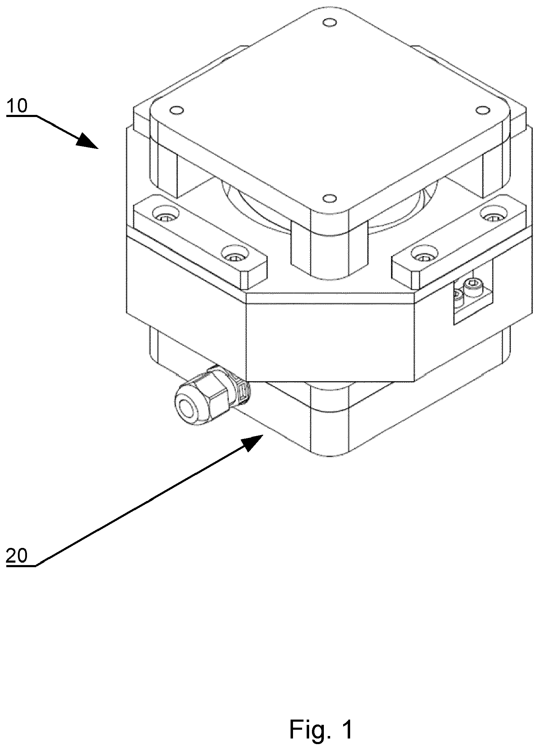

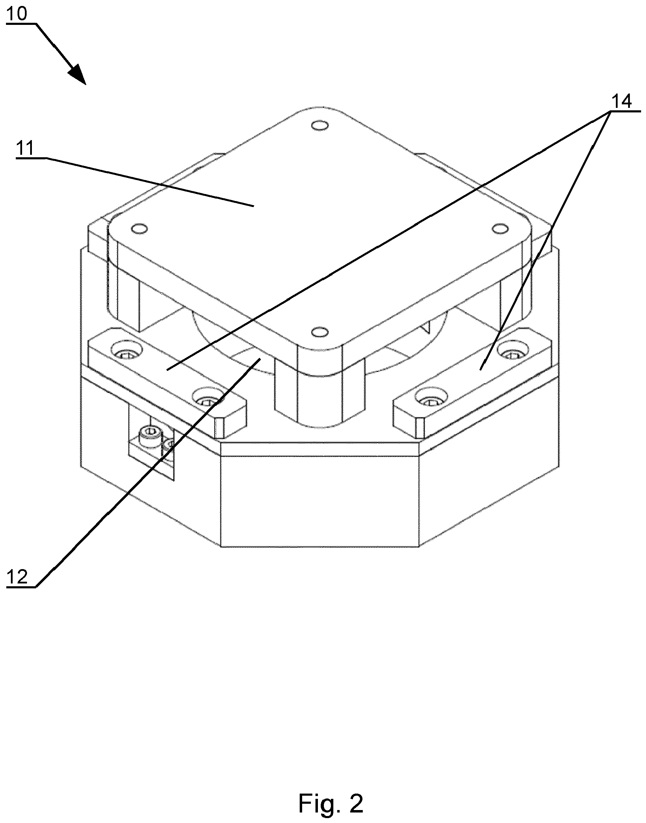

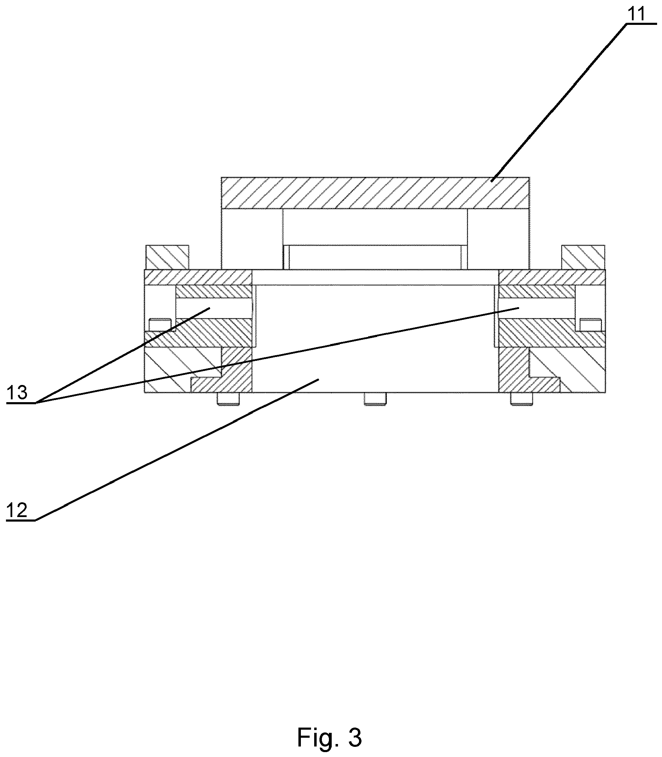

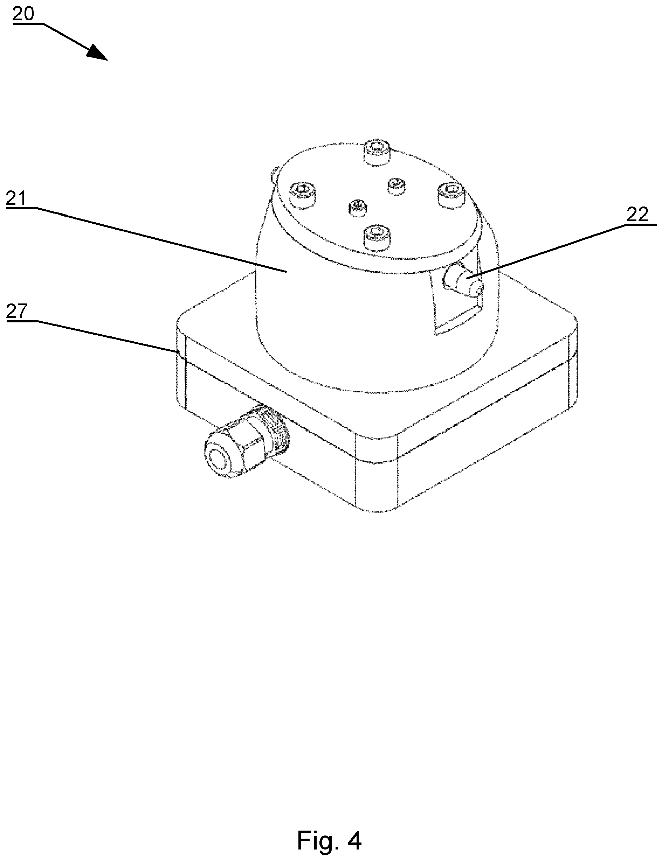

Fig. 1 presents a gripping assembly according to the invention. The gripping assembly 1 comprises a tool holder 10 (presented in Fig. 2) and a locking unit 20 (presented in Fig. 4). The tool holder 10 comprises a cylindrical socket 12 with through openings 13 (Fig. 3) located at a sidewall of the socket 12 and a tool mounting means 11 for mounting a tool thereto.

Preferably the tool mounting means 11 have a form of a plate to which the tool is attached, for example by means of screws.

The locking unit 20 comprises a guiding head 21 with bolts 22 for fixing the locking unit 20 in the through openings 13 of the socket 12 of the tool holder 10, and manipulator mounting means 27 for mounting the gripping assembly 1 to the manipulator.

Preferably the manipulator mounting means 27 have a form of a mounting plate which is mountable to a robot arm.

Both, the socket 12 and the through openings 13 are through openings for allowing the dust and any contaminations to be pushed by the guiding head 21 and the bolts 22 respectively out from the socket 12 and the through openings 13.

Preferably the guiding head 21 has a cylindrical shape at the side close to the manipulator mounting means 27 and a circular or oval or elliptical shape at its top. Such shape provides good guiding properties when the locking unit 10 is being inserted into the socket 12 of the tool holder 10. It also facilitates cleaning the socket 12 from contaminations, dust etc.

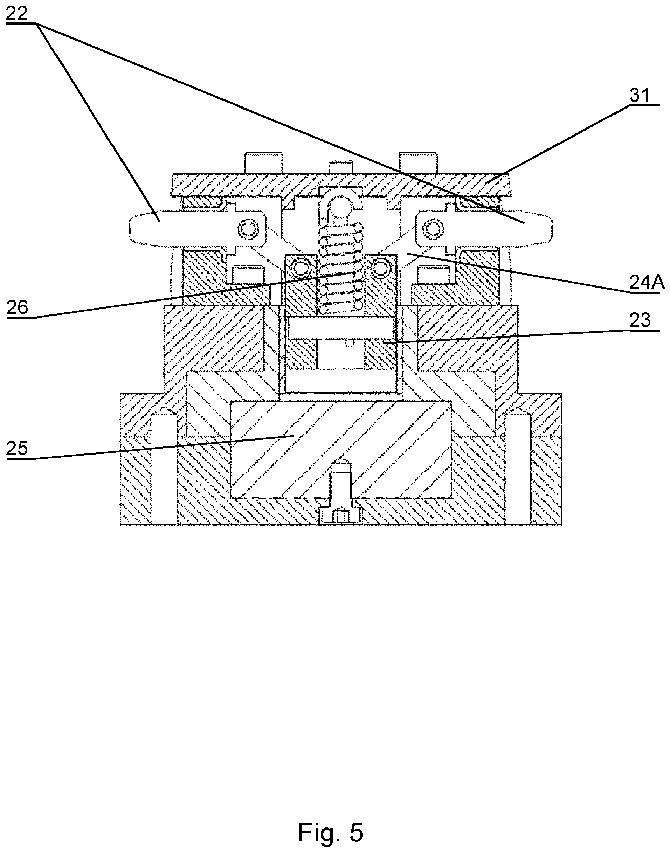

Fig. 5 presents a cross-section of the locking unit 20. Preferably, the bolts 22 have a substantially conical shape which facilitates cleaning the through openings 13 and provides guiding properties when the bolts 22 are being inserted into the through openings 13.

Preferably the bolts 22 are actuated by an electromagnetic locking mechanism comprising a metal piston 23 slidable in the direction perpendicular to the direction of movement of the bolts 22, wherein the metal piston 23 is actuated by an electromagnet 25 to a position in which the bolts 22 are retracted and is actuated by a spring 26 to a position in which the bolts 22 are extended. In emergency situations, when the electric current supplying the electromagnet 25 is cut off, the spring 26 assures that the bolts 22 are moved to their extended position, assuring that the tool is still attached to the tool holder 10.

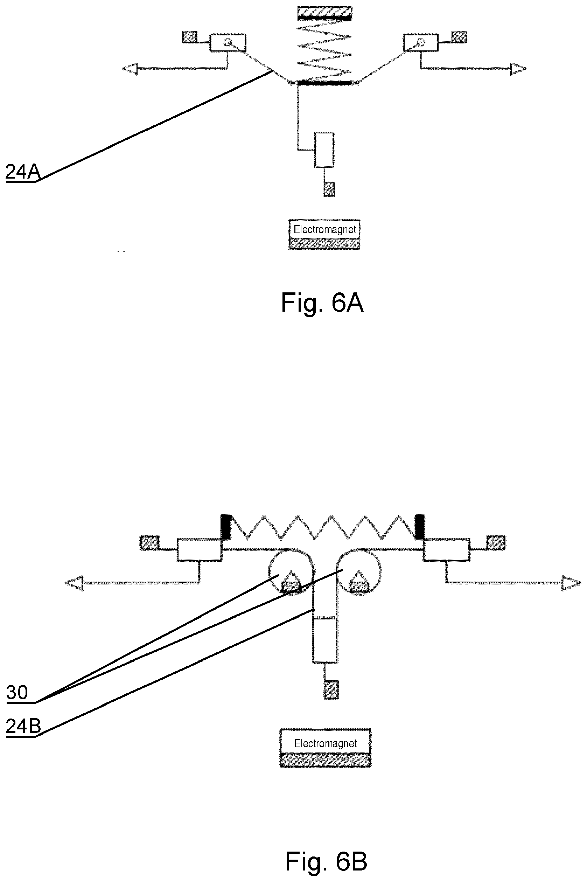

Preferably, the bolts 22 are connected to the metal piston 23 by means of stiff pivotable connecting rods 24A, wherein the spring 26 is attached to a top plate 31 of the guiding head 21 as presented in Fig. 5 and as presented schematically in Fig. 6A.

In another embodiment the bolts 22 may be connected to the metal piston 23 by means of flexible connecting cables 24B guided by pulleys 30, wherein the spring 26 is connected between the ends of the bolts 22 as presented schematically in Fig. 6B.

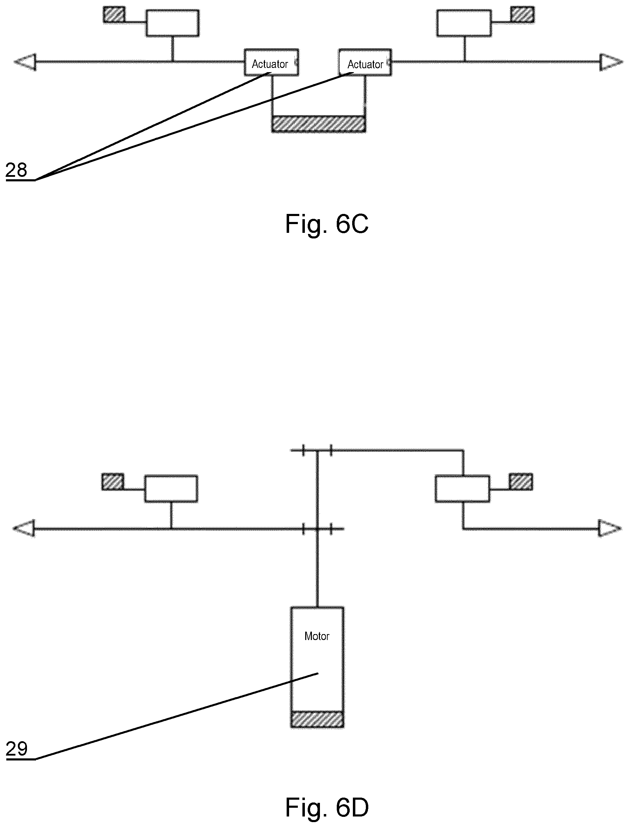

In yet another embodiment the bolts 22 may be directly actuated by means of pneumatic, hydraulic or electromagnetic actuators 28, as presented schematically in Fig. 6C or may be actuated by means of an electric motor 29 (a stepper motor or a servomotor), which is driving the bolts 22 by means of a drive screw as presented schematically in Fig. 6D.

Preferably the tool holder 10 comprises positioning plates 14 for positioning the tool holder 10 in a tool box, so that the tool and the tool holder 10 are arranged in a predetermined pick up position defined in the robotic system.

In particular the gripping assembly 1 may be used to attach different types of tools to a robot manipulator, for example tools relating to plastering works. For such system, each tool is equipped with the tool holder 10, which is fixed to the tool for example by means of screws, wherein the locking unit 20 is fixed to the robot arm. The tools may be therefore automatically, easily and quickly changed, by attaching and detaching the tool holder 10 and the locking unit 20, wherein in order to detach the tool holder 10 the bolts 22 are retracted and in order to attach the tool holder 10 the bolts 22 are in the extracted position.

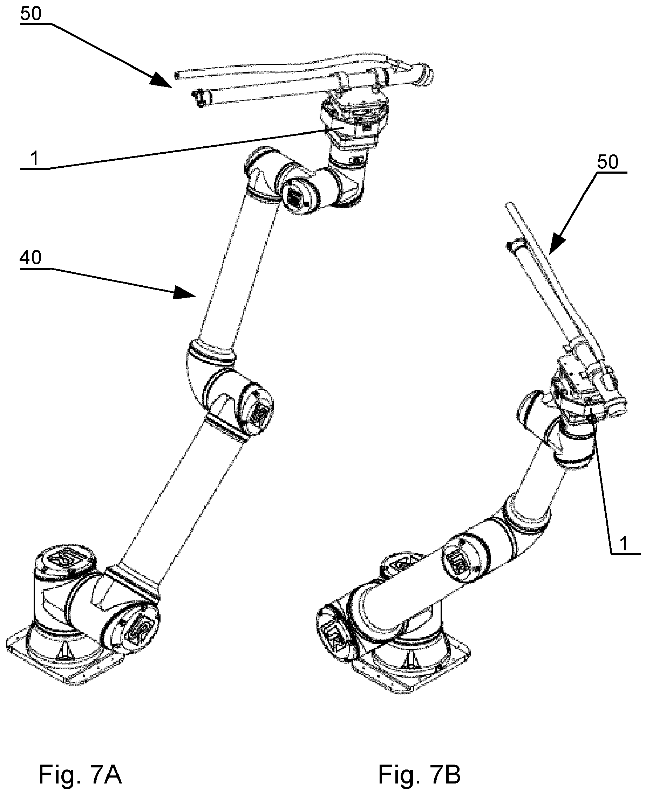

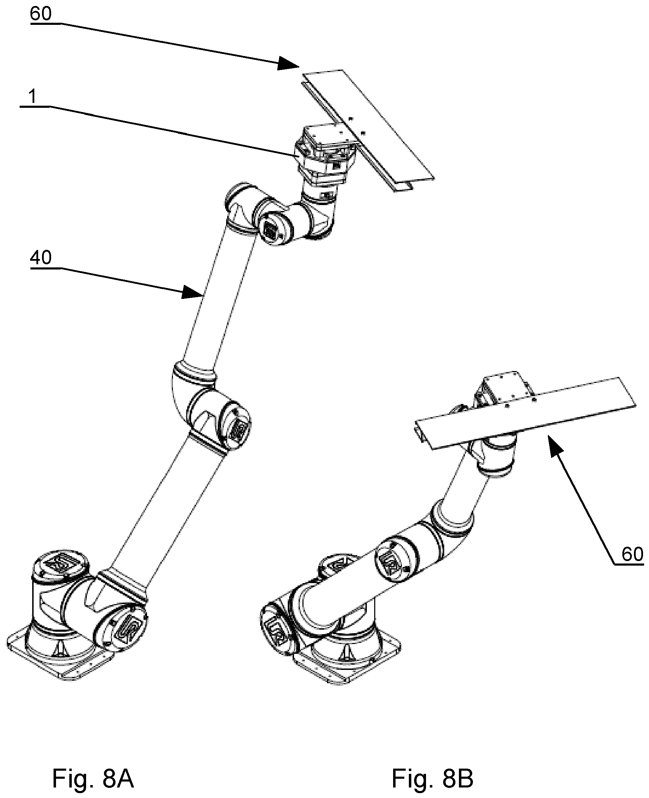

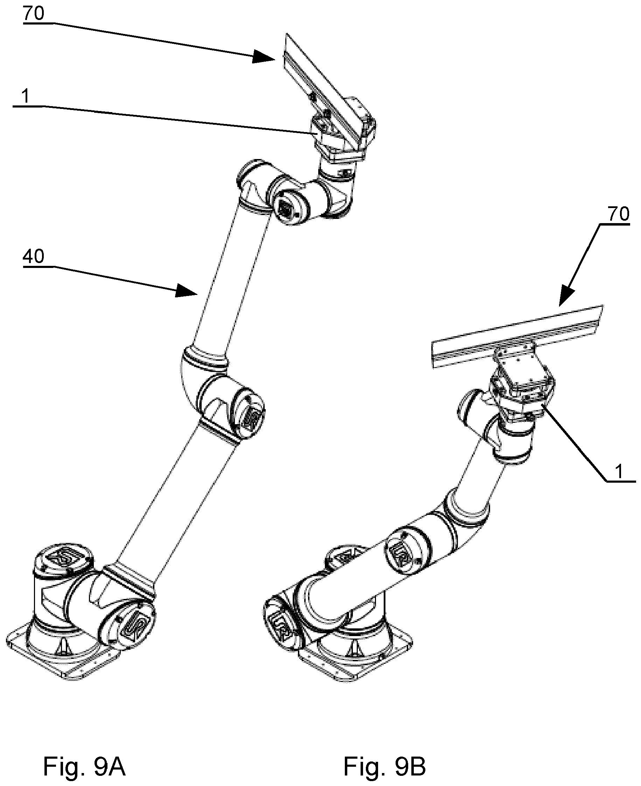

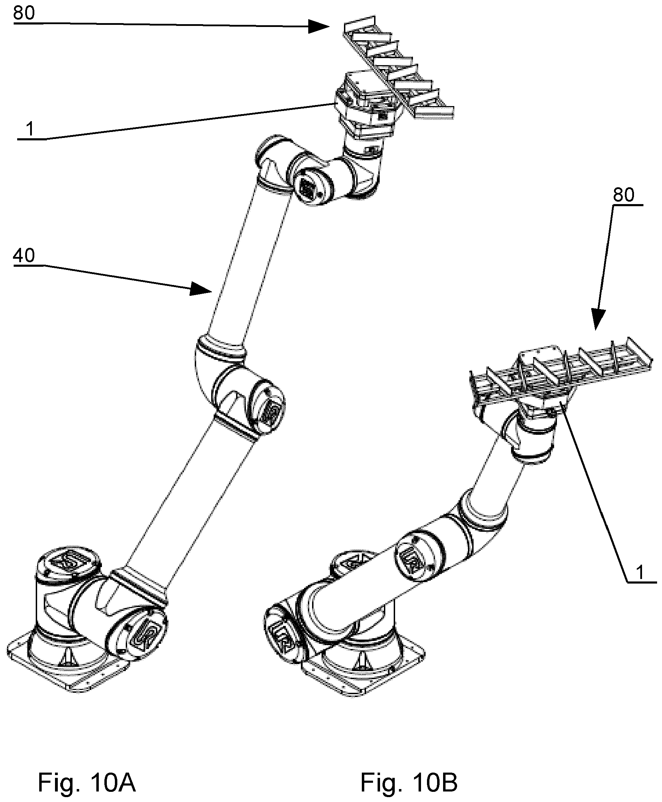

In practice, the gripping assembly can be used to grip a plastering lance 50 (as shown in Figs. 7A-7B), an "h" type plastering trowel 60 (Figs. 8A-8B), a "t" type plastering trowel 70 (Figs. 9A-9B) or a plaster scratcher 80 (Figs. 10A-10B).

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A gripping assembly (1) for coupling a tool with a manipulator, the gripping assembly (1) comprising:
- a tool holder (10) having a cylindrical socket (12) with through openings (13) located at a sidewall of the socket (12) and a tool mounting means (11) for mounting a tool thereto; and
- a locking unit (20) having a guiding head (21) with bolts (22) for fixing the locking unit (20) in the through openings (13) of the socket (12) of the tool holder (10) and having manipulator mounting means (27) for mounting the gripping assembly (1) to the manipulator.

2. The gripping assembly according to claim 1, wherein the socket (12) is a through opening.

3. The gripping assembly according to claim 1 or 2, wherein the bolts (22) are actuated by an electromagnetic locking mechanism comprising a metal piston (23) slidable in the direction perpendicular to the direction of movement of the bolts (22), wherein the metal piston (23) is actuated by an electromagnet (25) to a position in which the bolts (22) are retracted and is actuated by a spring (26) to a position in which the bolts (22) are extended.

4. The gripping assembly according to claim 3, wherein the bolts (22) are connected to the metal piston (23) by means of stiff pivotable connecting rods (24A).

5. The gripping assembly according to claim 3, wherein the bolts (22) are connected to the metal piston (23) by means of flexible connecting cables (24B) guided by pulleys (30).

6. The gripping assembly according to claim 1 or 2, wherein the bolts (22) are directly actuated by means of pneumatic, hydraulic or electromagnetic actuators (28) to a position in which the bolts (22) are retracted and to a position in which the bolts (22) are extended.

7. The gripping assembly according to claim 1 or 2, wherein the bolts (22) are actuated by means of electric motor (29) to a position in which the bolts (22) are retracted and to a position in which the bolts (22) are extended.
